# EUROPEAN PATENT SPECIFICATION

(11) **EP 1 898 433 B1**
(45) Date of publication and mention of the grant of the patent: **26.06.2013**
(21) Application number: 06767696.5
(22) Date of filing: 30.06.2006
(51) Int. Cl.: H01G 9/012, H01G 9/032, H01G 9/04, H01G 9/052

(54) **SOLID ELECTROLYTIC CAPACITOR AND PRODUCTION METHOD THEREOF**
FESTELEKTROLYTKONDENSATOR UND DESSEN HERSTELLUNGSVERFAHREN
CONDENSATEUR À ÉLECTROLYTE SOLIDE ET SON PROCÉDÉ DE PRODUCTION

(30) Priority: 30.06.2005 JP 2005191227
(43) Date of publication of application: 12.03.2008
(73) Proprietor: Showa Denko K.K., Tokyo 105-8518 (JP)
(72) Inventor: NAITO, Kazumi, Midori-ku, Chiba-shi, Chiba, 2670056 (JP)
(74) Representative: Strehl Schübel-Hopf & Partner
(86) International application number: PCT/JP2006/313088
(87) International publication number: WO 2007/004554

(56) References cited:
- EP-A2- 0 336 299
- JP-A- 01 053 533
- JP-A- 11 135 366
- JP-A- 2003 092 229
- JP-A- 2003 229 327
- JP-A- 2005 109 466
- US-A- 3 124 728
- US-A- 4 097 915
- US-A- 5 693 104

## Description

### TECHNICAL FIELD

The present invention relates to a solid electrolytic capacitor having excellent performance and reliability. More specifically, the invention relates to a method of producing a solid electrolytic capacitor, which can prevent a solution for forming semiconductor layer from crawling up in the process of forming a dielectric oxide film and semiconductor layer on a sintered body consisting of electroconductive powder and mitigate stress applied on the upper surface of the sintered body by molten resin at the time of encapsulating a solid electrolytic capacitor element to thereby produce a solid electrolytic capacitor with little deterioration in leakage current property (LC) and a solid electrolytic capacitor obtained by the method.

### BACKGROUND ART

One example of high-capacitance capacitors used in various electronic devices is a solid electrolytic capacitor obtained by encapsulating a solid electrolytic capacitor element with jacketing resin, comprising a rectangular parallelepiped sintered body of conductive powder having an anode lead implanted in one surface and having dielectric oxide film, a semiconductor layer and an electrode layer formed sequentially on the surface of the sintered body.

A solid electrolytic capacitor is fabricated by encapsulating a solid electrolytic capacitor element consisting of a sintered body of conductive powder such as tantalum having micropores inside it as one electrode (conductor), a dielectric layer formed on the electrode, the other electrode (generally, semiconductor layer) formed on the dielectric layer and another electrode layer formed on the said other electrode. When volumes of conductors are the same, the smaller the size of the micropores and the larger the number of the micropores, the larger the inside surface area of a conductor and therefore, the larger the capacitance of a produced capacitor from the conductor.

Recently, in a solid electrolytic capacitor, a low ESR (Equivalent Series Resistance) is required. To meet this requirement, an electroconductive polymer is always employed as an inner semiconductor layer. Such a semiconductor layer is formed by chemical polymerization method or electrolytic polymerization method. As one example, a semiconductor layer is formed by immersing a conductor having a dielectric layer thereon alternately except for anode lead of the conductor in two solutions separately prepared, one containing oxidant and dopant and the other containing monomer, and repeating this immersion operation twice or more. For the purpose of preventing each solution from crawling up onto the anode lead and forming the semiconductor there, a method where an insulating plate is provided at the foot of the anode lead has been proposed. For example, Japanese Patent Application Laid-Open No. H07-201662 (Patent Document 1) teaches preventing crawling-up of solution by making angles at end parts of an insulating plate larger than contact angles with solution. In addition, Japanese Patent Application Laid-Open No. H11-135366 (Patent Document 2) describes an insulating plate whose thickness is defined in the document. Also, Japanese Patent Application Laid-Open No. H03-255607 (Patent Document 3) teaches tightly adhering an insulating plate with an anode lead by melting. Moreover, Japanese Patent Application Laid-Open No. H02-187009 (Patent Document 4) has proposed coating an anode lead part with a resin instead of using an insulating plate.

However, these solid electrolytic capacitor elements, which are processed to be encapsulated with jacketing resin to thereby become solid electrolytic capacitors, are sometimes damaged by curing stress or pressure caused by resin incursion at the time of encapsulation and as a result, leakage current (hereinafter, abbreviated as LC) increases.
Especially, on the face where the lead is implanted, thickness of formed semiconductor layer is small or in some cases no semiconductor layer is formed. Further, since no electrode layer is formed on the face in many cases, the face is considered to be very vulnerable to damage.

Particularly, in a case where capacitance of produced capacitor is enhanced by using a conductive powder having a small particle size, deterioration in LC is significantly caused. As a method for mitigating impact of encapsulation with jacketing material, for example, Japanese Patent Application Laid-Open No. H02-128416 (Patent Document 5) has proposed a method of conducting jacketing step after a encapsulating a capacitor element including a predetermined portion of an anode lead with a resin such as fluorine resin. However, in this method, it is difficult to obtain a uniform thickness of the capacitor element thus encapsulated with resin. Accordingly, when such an element is jacketed with jacketing resin, thickness of the jacketing resin will not be uniform, either. If thickness of the jacket is thinner in some parts than other parts in the capacitor, the capacitor lacks reliability.

[Patent Document1]
   Japanese Patent Application Laid-Open No. H07-201662
[Patent Document2]
   Japanese Patent Application Laid-Open No. H11-135366
[Patent Document3]
   Japanese Patent Application Laid-Open No. H03-255607
[Patent Document4]
   Japanese Patent Application Laid-Open No. H02-187009
[Patent Document5]
   Japanese Patent Application Laid-Open No. H02-128416

### DISCLOSURE OF INVENTION

### PROBLEMS TO BE SOLVED BY INVENTION

The object of the present invention is to provide a solid electrolytic capacitor excellent in performance and reliability, by preventing solutions from crawling up at the time of forming a semiconductor layer and mitigating stress applied onto the surface of the sintered body by molten resin at the time of encapsulation.

### MEANS FOR SOLVING THE PROBLEMS

As a result of intensive studies with a view to attaining the above object, the present inventors have found out that a solid electrolytic capacitor excellent in performance and reliability can be obtained by preparing a solid electrolytic capacitor element using a sintered body consisting of a conductive powder in one face of which sintered body an anode lead is implanted, with an insulating plate having the same shape as the face being provided on the anode lead, in parallel with said face and 5 to 100 µm apart from said face, and on which sintered body a dielectric oxide film and a semiconductor layer has been formed, and thus completed the invention.

That is, the present invention relates to a method of producing a solid electrolytic capacitor defined by the features of the claim 12, and a solid electrolytic capacitor defined by the features of claims 1, as produced by the method as follows.
[1] A solid electrolyte capacitor, which is a solid electrolytic capacitor obtainable by
   implanting an anode lead (2) in one face of a rectangular parallelepiped sintered body (1) of conductive powder,
   fixing an insulating plate (3) in parallel with and 5 to 100 µm apart from the face having the anode lead implanted therein, with the insulating plate having almost the same shape as the face having the anode lead implanted therein, and with the anode lead going through the plate,
   stacking sequentially a dielectric oxide film, a semiconductor layer and an electrode layer on the sintered body, and
   encapsulating the whole with jacketing resin.
[2] The solid electrolytic capacitor according to [1] above, wherein the anode lead is in form of wire, foil or sheet.
[3] The solid electrolytic capacitor according to [1] above, wherein the material of the anode lead is tantalum, aluminium, niobium, titanium or an alloy mainly containing these valve-action metals.
[4] The solid electrolytic capacitor according to [1] above, wherein the conductive powder is a metal or alloy consisting mainly of at least one selected from the group consisting of tantalum, niobium, titanium and aluminium, niobium oxide, or a mixture of two or more of these metals, alloys and niobium oxide.
[5] The solid electrolytic capacitor according to [1] above, wherein the semiconductor layer is at least one selected from organic semiconductor layer and inorganic semiconductor layer.
[6] The solid electrolytic capacitor according to [5] above, wherein the organic semiconductor layer is at least one kind of semiconductors consisting mainly of an electroconductive polymer prepared by doping a polymer having a repeating unit represented by formula (1) or (2) with a dopant, 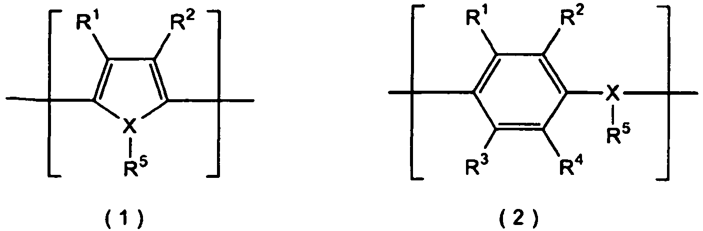 wherein R¹ to R⁴ each independently represents a hydrogen atom, an alkyl group having 1 to 6 carbon atoms or an alkoxy group having 1 to 6 carbon atoms, X represents an oxygen atom, a sulfur atom or a nitrogen atom, R⁵, which is present only when X is a nitrogen atom, represents a hydrogen atom or an alkyl group having 1 to 6 carbon atoms, and R¹ with R² or R³ with R⁴ may combine with each other to form a ring.
[7] The solid electrolytic capacitor according to [6] above, wherein the electroconductive polymer having the repeating unit represented by formula (1) is an electroconductive polymer having as repeating unit a structural unit represented by formula(3), 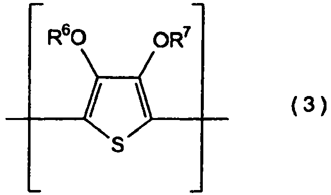 wherein R⁶ and R⁷ each independently represents a hydrogen atom, a linear or branched, saturated or unsaturated alkyl group having 1 to 6 carbon atoms, or a substituent forming at least one 5- to 7-membered saturated hydrocarbon ring structure containing two oxygen atoms, in which said alkyl groups are bonded at arbitrary positions with each other, wherein the ring structure includes those having a vinylene or phenylene bond which may be substituted.
[8] The solid electrolytic capacitor according to [6] above, wherein the electroconductive polymer is selected from polyaniline, polyoxyphenylene, polyphenylene sulfide, polythiophene, polyfuran, polypyrrole, polymethylpyrrole, and substituted derivatives thereof and copolymers thereof.
[9] The solid electrolytic capacitor according to [8] above, wherein the electroconductive polymer is poly(3,4-ethylenedioxythiophene).
[10] The solid electrolytic capacitor according to [5] above, wherein the inorganic semiconductor is at least one compound selected from a group consisting of molybdenum dioxide, tungsten dioxide, lead dioxide and manganese dioxide.
[11] The solid electrolytic capacitor according to [5] above, wherein the electroconductivity of the semiconductor is within a range of 10⁻² to 10³ S/cm⁻¹.
[12] A method of producing a solid electrolytic capacitor comprising
   implanting an anode lead (2) in one face of a rectangular parallelepiped sintered body (1) of conductive powder,
   fixing an insulating plate (3) in parallel with and 5 to 100 µm apart from the face having the anode lead implanted therein, with the insulating plate having almost the same shape as the face having the anode lead implanted therein, and with the anode lead going through the plate
   stacking sequentially a dielectric oxide film, a semiconductor layer and an electrode layer on the sintered body, and
   encapsulating the whole with jacketing resin.
[13] An electronic circuit using the solid electrolytic capacitor described in any one of [1] to [11] above.
[14] An electronic device using the solid electrolytic capacitor described in any one of [1] to [11].

### EFFECT OF INVENTION

The present invention provides a solid electrolytic capacitor element comprising on an anode lead an insulating plate of almost the same shape as the face having the anode lead implanted therein provided in parallel with and 200 µm or less apart from the face having the anode lead implanted therein, a capacitor using the element and a production method thereof. According to the present invention, solutions for forming a semiconductor layer or the like can be prevented from crawling up and stress applied onto the sintered body surface by molten resin at the time of encapsulating the element can be reduced. Accordingly, a solid electrolytic capacitor involving little deterioration in leakage current (LC) and having high performance and reliability can be obtained.

### BEST MODE FOR CARRYING OUT THE INVENTION

One embodiment of the solid electrolytic capacitor according to the present invention is explained by referring to attached Figures, hereinbelow.

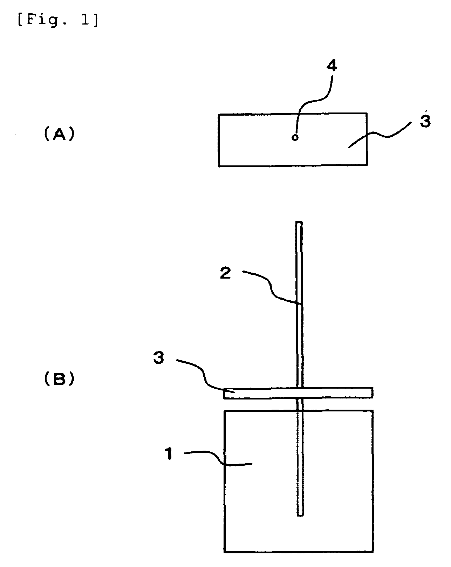

Figs. 1 (A) and (B) are schematic side and top views of the solid electrolytic capacitor of the present invention, respectively. (In Fig.1, each part is shown in an exaggerated form, to make it explanation-friendly.)

The solid electrolytic capacitor of the present invention is produced by implanting an anode lead (2) in the center of one face of a sintered body (1) consisting of conductive powder, fixing an insulating plate (3) for the anode lead to go through at a distance 5 to 100 µm apart from the face in parallel with the face, stacking sequentially a dielectric oxide film layer, a semiconductor layer and an electrode layer and then encapsulating the whole. In the present invention, "providing an insulating plate on the anode lead" means providing an insulating plate in a manner that the anode lead pierces the plate through a hole and the insulating plate at the hole adheres tightly to the periphery of the anode lead.

The sintered body used in the present invention is produced by sintering a molded body of conductive powder in which an anode lead is implanted in a face. By selecting appropriate ranges of molding pressure (e.g., 0.1 to 50 Kg/mm²) and sintering conditions (e.g., a temperature of 800 to 1800 °C and sintering time of 1 minute to 10 hours), the surface area of the sintered body can be increased. For the purpose of further increasing the surface area of the sintered body after sintered, the surface of the sintered body may be subjected to chemical/electrical etching treatment.

There is no limitation on the shape of the sintered body. Generally, it has a columnar shape. In case of prismatic shape, at least one of angles may be chamfered or made spherical so that the average leakage current value (LC) of the solid electrolytic capacitor produced by using the sintered body may be excellent. Also, in order to be easily taken out of a molding die, the molded body may have a tapered shape. In such a case, the shape of the prepared sintered body becomes an approximate truncated pyramid.

In the present invention, the anode lead may have either shape of wire, foil and sheet. Also, the anode lead may be connected to the sintered body after sintering, instead of implanting the anode lead in the molded body before sintering. Examples of the material for the anode lead include tantalum, aluminium, niobium, titanium and alloys mainly containing these valve-action metals. Moreover, the anode lead may be used after subjecting a part thereof to at least one treatment selected from carbonization, phosphation, boronation, nitridation, sulfidation and oxidation.

In a case where the anode lead is implanted in the molded body, it is preferable that the implantation depth of the anode lead in the sintered body be one-third or more of the sintered body's length in the implanting direction, more preferably two-thirds or more, in consideration for maintaining strength of the sintered body to endure the thermal and physical pressures at the time of encapsulating the capacitor element which is described later.

Examples of the conductor include tantalum, aluminium, niobium, titanium, alloys mainly containing these valve-action metals, niobium oxide and mixtures of two or more of these valve-action metals, alloys and electroconductive oxides.

Generally, valve-action metals or electroconductive oxides are powdery.
Valve-action metals, above-described alloys, elecrtroconductive polymers or above-described sintered bodies may be used after subjecting a part thereof to at least one treatment selected from carbonization, phosphation, boronation, nitridation, sulfidation and oxidation.

Examples of insulating plate used in the present invention include those made of known resins such as
Urethane resin, phenol resin, allylester resin, acryl resin, alkyd resin, fluorine resin, ester resin, epoxy resin, imide resin, amide resin, imide-amide resin, styrene resin, polyethylene resin, polypropylene resin and silicone resin. The size and shape of the insulating plate insulating plate are substantially the same as those of the face in which the anode lead has been implanted. The thickness of the plate is within a range of 0.05 to 1mm, preferably 0.1 to 0.3 mm. For the purpose of preventing solution from crawling up at the time of forming a semiconductor, it is more effective if the insulating plate is larger than the corresponding face of the sintered body. In consideration for the shape of the final product capacitor, the size is limited to a range that can be jacketed as a capacitor. Generally, the shape of the insulating plate is almost the same as that of the corresponding face of the sintered body. Here, the term "almost the same" include those reduced to 90 % or more or magnified up to 110 % of the corresponding face of the sintered body, based on the perimeter of the the corresponding face of the sintered body. It is preferable that the shape of the insulating plate be 95 % or 105 % of the face of the sintered body in terms of the above-described ratio, and most preferably, the shape and size of the insulating plate is the same as the face of the sintered body having the anode wire implanted therein. In the insulating plate, a hole (4) for the anode lead to go through is provided. If the anode lead is a round wire, the shape of the hole is a circle corresponding to the size of the lead wire. If the cross-section of the anode lead is rectangular, the shape of the hole is a rectangle corresponding to the cross-section of the lead. The lead wire is inserted through the hole of the insulating plate, and the insulating plate is fixed with some distance from the sintered body, with each corner of the plate facing each corresponding corner of the face of the sintered body having the lead wire implanted therein. It is preferable that the hole in the insulating plate be prepared to be a little smaller than the size of cross-section of the lead wire, in that the insulating plate can be more easily fixed to the lead wire with frictional force. By leaving some space between the sintered body and the insulating plate, a semiconductor layer is formed in the space to thereby enhance moisture resistance of the produced capacitor. On the other hand, without any space therebetween, no semiconductor layer is formed and sometimes, a trace amount of vapor enters the space during moisture resistance test (e.g., 60 °C and 90 %RH) to thereby cause deterioration in LC and other properties of the produced capacitor.

The distance between the sintered body and insulating plate is 5 to 100 µm. If the distance exceeds 200 µm, it is not preferred in that molten resin can easily enter the space at the time of encapsulation with resin, which will result in deterioration in LC.

The solid electrolytic capacitor of the present invention is produced by a step of preparing a solid electrolytic capacitor element by sequentially stacking a semiconductor layer and an electrode layer to form a cathode part on the above described sintered body having a dielectric oxide film formed thereon and having an anode lead with an insulating plate and then a step of connecting a part of the anode lead with an anode terminal and a part of the cathode part with a cathode terminal respectively and encapsulating the whole element except for part of the anode and cathode terminals with jacketing material.

In the present invention, a dielectric oxide film layer is formed on the sintered body and part of the anode lead. Examples of dielectric oxide film layer include dielectric layers mainly containing at least one of metal oxides such as Ta₂O₅, Al₂O₃, TiO₂ and Nb₂O₅. The dielectric layer can be obtained by chemically forming the anode substrate in an electrolysis solution. Alternatively, the layer may be a dielectric layer comprising a mixture of a dielectric layer mainly containing at least one metal oxide and a dielectric layer used in a ceramic capacitor (International Publication No. WO00/75943 pamphlet (US Patent No.6430026)).

A typical example of the semiconductor layer formed on the dielectric layer in the present invention is at least one kind of compounds selected from organic semiconductors and inorganic semiconductors.

Examples of organic semiconductor include an organic semiconductor consisting of benzopyrroline tetramer and chloranile, an organic semiconductor mainly consisting of tetrathiotetracene, an organic semiconductor mainly consisting of tetracyanoquinodimethane and an organic semiconductor mainly consisting of an electroconductive polymer prepared by doping a polymer having a repeating unit represented by formula (1) or (2) with a dopant.

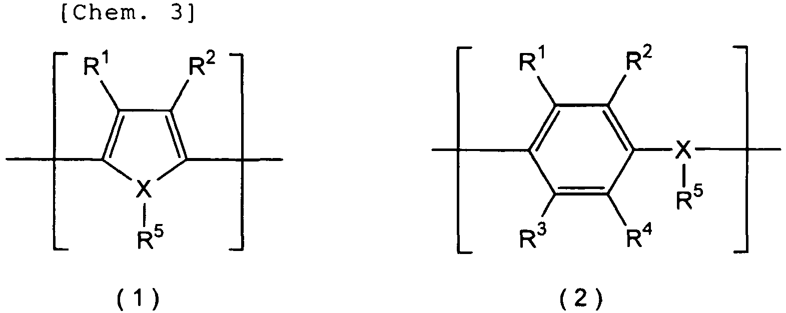

In formulae (1) and (2), R¹ to R⁴ each independently represents a hydrogen atom, an alkyl group having 1 to 6 carbon atoms or an alkoxy group having 1 to 6 carbon atoms, X represents an oxygen atom, a sulfur atom or a nitrogen atom, R⁵, which is present only when X is a nitrogen atom, represents a hydrogen atom or an alkyl group having 1 to 6 carbon atoms, and R¹ with R² or R³ with R⁴ may combine with each other to form a ring.

Further, in the present invention, the electroconductive polymer containing the repeating unit represented by formula (1) is preferably an electroconductive polymer containing as repeating unit a structural unit represented by formula (3).

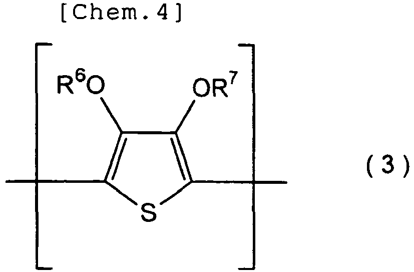

In the formula, R⁶ and R⁷ each independently represents a hydrogen atom, a linear or branched, saturated or unsaturated alkyl group having 1 to 6 carbon atoms, or a substituent forming at least one 5- to 7-membered saturated hydrocarbon ring structure containing two oxygen atoms, in which said alkyl groups are bonded at arbitrary positions with each other. Also, examples of the ring structure include those having a vinylene or phenylene bond which may be substituted.

The electroconductive polymer containing such a chemical structure is charged and doped with a dopant. There is no particular limitation on the dopant and known dopants may be used.

Examples of polymer containing a repeated unit repreasented by formula (1), (2) or (3) include polyaniline, polyoxyphenylene, polyphenylene sulfide, polythiophene, polyfuran, polypyrrole, polymethylpyrrole, substituted derivative thereof and copolymers thereof. Preferred among them are polypyrrole, polythiophene and substituted derivatives thereof (such as poly(3,4-ethylenedioxythiophene)).

The above-described semiconductor layer is formed by pure chemical reaction (i.e., solution reaction, vapor phase reaction or combination thereof), by electrolytic polymerization or by combination of these methods. It is preferable that at least one step of electrolytic polymerization be included in the process of forming the semiconductor layer, in that the initial ESR value of the produced capacitor can be low as compared to those produced by other methods, for possible reasons that no branch is present in the electroconductive polymer chain and that thickness of the semiconductor layer formed on the outer surface of the conductor can be uniform.

Examples of the inorganic semiconductor include at least one compound selected from a group consisting of molybdenum dioxide, tungsten dioxide, lead dioxide and manganese dioxide.

When the organic or inorganic semiconductor used has an electric conductivity of 10⁻² to 10³ S/cm⁻¹, the solid electrolytic capacitor produced can have a small ESR value and this is preferred.

In the present invention, for the purpose of mending minute defects of dielectric layer caused by formation of the semiconductor layer, chemical formation may be conducted again. The operation of forming semiconductor layer and conducting chemical reformation may be repeated twice or more. Also, conditions for forming semiconductor layer and for chemical reformation may be changed in each operation repeated. Generally, when formation of semiconductor layer is stopped, the conductor is pulled up from the semiconductor layer-forming solution, washed and dried. Then, chemical formation is allowed to be conducted again. Or, the series of operation steps of formation of semiconductor layer/stopping of formation of semiconductor layer/washing/drying may be repeated twice or more and then chemical reformation may be started. Although the reason is not clear, the mass of the semiconductor is increased in a case where the series of operation steps of formation of semiconductor layer/stopping of formation of semiconductor layer/washing/drying is repeated, as compared to a case where formation of semiconductor layer is continuously carried out, if the total time for forming semiconductor layer is the same in both of the cases.

Chemical reformation can be conducted in the same manner as in formation of dielectric layer as described previously or by conventional method of chemical reformation in electrolytic solution. It is preferable that chemical reformation be carried out in the same electrolytic solution as used in formation of dielectric layer according to the present invention, in that the ESR value of the produced capacitor can be low. The voltage employed in chemical reformation is generally the voltage value used in the chemical formation or lower.

Also, as a preliminary treatment for enhancing formation yield of the semiconductor layer, minute protrusions may be formed as electrically defective parts on the dielectric layer formed on the conductor surface before formation of the semiconductor layer.

In a case where formation of semiconductor layer is completed by two or more divided steps, although chemical reformation may be carried out at an arbitrary timing arbitrary times in the process, it is preferred that chemical reformation be conducted after the final formation of the semiconductor layer.

In the present invention, an electrode layer is formed on the thus formed semiconductor layer. The electrode layer can be formed, for example, by solidification of an electroconductive paste, plating, metal deposition or lamination of a heat-resistant electrically conductive resin film. Preferred examples of the electroconductive paste include silver paste, copper paste, aluminum paste, carbon paste and nickel paste. One of these may be used or two or more thereof may be used. In the case of using two or more pastes, these pastes may be mixed or stacked as separate layers. The electroconductive paste applied is then left standing in air or heated to thereby be solidified.

Main components of electroconductive paste are resin and conductive powder of metals or the like. If desired, solvent to dissolve resin or agent for curing the resin may be used. Solvent evaporates at the time of the previously described thermal solidification step. Examples of resin used here include known resins such as alkyd resin, acrylic resin, epoxy resin, phenol resin, imide resin, fluorine resin, ester resin, imide-amide resin, amide resin and styrene resin. Examples of conductive powder used here include silver, copper, aluminium, gold, carbon, nickel, alloys mainly containing these metals and mixtures thereof. Generally, an electroconductive paste contains 40 to 97 mass% of electroconductive powder. If the content is less than 40 mass%, the conductivity of the prepared electroconductive paste is low. If the content exceeds 97 mass%, adhesiveness of the prepared electroconductive paste is insufficient. An electroconductive paste in a mixture with electroconductive polymer or metal oxide powder as previously described as usable for forming the semiconductor layer may be used.

Examples of the plating include nickel plating, copper plating, silver plating, gold plating and aluminum plating. Examples of the metal to be deposited include aluminum, nickel, copper, gold and silver.

Specifically, an electrode layer is formed by sequentially stacking, for example, a carbon paste and a silver paste on a semiconductor layer formed thereon. By stacking the layers up to the electrode layer on the conductor in this way, a solid electrolytic capacitor element is produced.

The solid electrolytic capacitor element of the present invention having such a structure is jacketed, for example, by resin mold, resin case, metallic jacket case, resin dipping or laminate film, whereby a solid electrolytic capacitor product for various uses can be completed. Among these, a chip-type solid electrolytic capacitor jacketed by resin mold is most preferred, in that reduction in the size and costs can be easily achieved.

The resin mold jacketing is specifically described below. A part of the electrode layer of the capacitor element obtained as above is placed on one end part of a separately prepared lead frame having a pair of oppositely disposed end parts, and a part of the conductor is placed on the other end part of the lead frame. At this time, in a case where the conductor has an anode lead, in order to adjust the dimensions, the anode lead may be used after cutting off some end part thereof. After connecting the above parts electrically or mechanically, i.e., the former (one end part of the lead frame) is connected by solidification of an electrically conducting paste and the latter (the other end part of the lead frame) by welding, the entirety is encapsulated with a resin while leaving a part of end of the lead frame outside the encapsulation, and the lead frame is cut at a predetermined portion outside the resin encapsulation and bent (when the lead frame is present on the bottom surface of resin encapsulation and the entirety is encapsulated while leaving only the bottom surface or the bottom and side surfaces of the lead frame outside the encapsulation, only cutting process without bending may be sufficient), whereby the capacitor of the present invention is produced.

The lead frame is cut as described above and finally works out to an external terminal of the capacitor. The shape thereof is a foil or flat plate form and the material used therefor is iron, copper, aluminium or an alloy mainly comprising such a metal. The lead frame may be partially or entirely covered with at least one plating layer such as solder, tin, titanium, gold, silver, nickel, palladium and copper.

After or before the above-described cutting and bending, the lead frame may be subjected to various platings. It is also possible to plate the lead frame before mounting and connecting the solid electrolytic capacitor element thereon and again plate it at any time after encapsulation.

In the lead frame, a pair of oppositely disposed end parts is present and a gap is provided between these end parts, whereby the anode part and the electrode layer part of each capacitor element are insulated from each other.

With respect to the resin used for resin mold jacketing, known resins used for encapsulation of a capacitor, such as epoxy resin, phenol resin, alkyd resin, ester resin and allyl ester resin, can be employed. As for each of these resins, it is preferable to use a low-stress resin (for example, a resin containing usually 70 vol% or more of a filler and having a thermal expansion coefficient α of 3×10⁻⁵/°C or less) generally available on the market, in that the encapsulation stress imposed on the capacitor element at the time of encapsulation can be mitigated. For encapsulation with resin, a transfer machine is used with preference.

The thus-produced solid electrolytic capacitor may be subjected to aging treatment so as to mend thermal and/or physical deterioration of the dielectric layer, which has been caused at the time of formation of electrode layer or at the time of jacketing.

The aging treatment is performed by applying a predetermined voltage (usually, within twice the rated voltage) to the capacitor. The optimal values of aging time and temperature vary depending on the type and capacitance of the capacitor and the rated voltage and therefore, these are previously determined by conducting preliminary experiments. The aging time is usually from several minutes to several days and the aging temperature is usually 300 °C or less, in consideration for thermal deterioration of the voltage-applying jig.

The aging may be performed in any one condition of reduced pressure, atmospheric pressure and applied pressure. The aging atmosphere may be air or a gas such as argon, nitrogen and helium. Preferred atmosphere for aging treatment is water vapor. When the aging is first performed in water vapor and then performed in air or a gas such as argon, nitrogen and helium, stabilization of the dielectric layer sometimes proceeds. It is also possible to conduct aging in aging atmosphere where water vapor is first supplied and then the atmosphere is allowed to return to room temperature and normal pressure or to conduct aging in atmosphere where water vapor is supplied and then allow the capacitor to stand at an increased temperature of 150 to 250 °C for several minutes to thereby remove excessive moisture. One example of method for supplying water vapor is a method of supplying water vapor from a water reservoir placed in the aging furnace by heat, or a method of performing the aging in a constant temperature and humidity bath.

The method of applying a voltage can be designed so as to pass an arbitrary current such as direct current, alternating current having an arbitrary waveform, alternating current superposed on direct current, and pulse current. It is possible to once stop applying a voltage on the way of aging process and again apply a voltage. Also, the aging may be performed while gradually raising a voltage from low voltage to high voltage.

The solid electrolytic capacitor produced by the method of the present invention can be preferably used, for example, in a circuit using a high-capacitance capacitor, such as central processing circuit and power source circuit. These circuits can be used in various digital devices such as a personal computer, server, camera, game machine, DVD equipment, audio-visual equipment and cellular phone, and electronic devices such as various power sources. The solid electrolytic capacitor produced in the present invention, which has a high capacitance and reliability, can contribute to production of high-performance electronic circuits and electronic devices, achieving a high user satisfaction.

### EXAMPLES

The present invention is described in greater detail below by specifically referring to Examples. Examples 4 and 8 are not examples of the invention, but are useful for its understanding.

### Examples 1 to 3:

Tantalum sintered bodies each having a size of 4.5×1.0×1.5 mm were prepared by molding tantalum powder having a CV value (a product of capacitance and electrochemical voltage) of 140,000 µF·V/g and a 0.40-mmΦ tantalum outgoing lead wire (sintering temperature: 1300 °C, sintering time: 20 minutes, density of sintered body: 6.6 g/cm³) (The lead wire was vertically implanted to a depth of 4 mm in the center of a 1.0×1.5 mm face of each of the sintered body with 10 mm of the lead wire present outside the sintered body). Next, a tetrafluoroethylene-made insulating plate of 1.5 mm(length) ×1.0 mm(width)×0.2 mm(thickness) having a 0.38-mmΦ hole in the center was prepared. The tantalum lead wire was allowed to go through the hole and then the plate was fixed at a position apart from each of the sintered bodies (distance between the plate and the sintered body in each unit is shown in Table 1). Each lot consisting of 640 units of thus prepared sintered body was subjected to following treatments.

Each of the sintered bodies was immersed in aqueous 1% phosphoric acid solution, except for a part of the lead wire. A voltage of 9V was applied between the lead wire as anode and a tantalum-made cathode plate placed in the solution to thereby conduct chemical formation at 80 °C for 8 hours. As a result, a dielectric oxide film layer consisting of Ta₂O₅ was formed. Then the sintered body except for the lead wire was immersed in a solution prepared by dissolving 30 g of ammonium molybdate and 200 g of nickel sulfate 6-hydrate in 800 g of water and added thereto 250 ml of 1N-ammonium hydroxide, and a voltage of 2.2 V was applied between the lead wire as anode side and a tantalum-made plate placed in the solution as cathode, to there by cause electrolysis reaction at room temperature for 150 minutes.
After the reaction, the sintered body was pulled out from the solution, washed with water, and dried, followed by chemical reformation in 0.1% phosphoric acid solution at 8V, 80 °C for 30 minutes. After the chemical reformation, the sintered body was washed with water and dried.

Next, each of the sintered body except for the lead wire was immersed in an ethanol solution of 15% 3,4-ethylenedioxythiophene monomer solution, pulled out, and dried at 80 °C to thereby allow ethanol to evaporate and the inside of the pores of the sintered body to be impregnated with precursors for forming a semiconductor layer.

Subsequently, each of the sintered body except for the lead wire was immersed in 20% ethyleneglycol electrolysis solution (semiconductor-layer-forming solution) comprising water containing ethylenedioxythiophene (used in form of an aqueous solution in which monomers are contained at saturation concentration or lower) and anthraquinone dissolved therein. By using a supply terminal on the left side of the upper surface of a metal frame, a direct constant current was passed from the lead wire to a tantalum electrode plate placed in the electrolysis solution, at 0.094 mA per sintered body, at room temperature for 30 minutes, to thereby conduct electric current application for forming a semiconductor layer. After pulling out the sintered body, washing with water and then with ethanol and drying, by using a supply terminal on the right side of the rear surface of the metal frame, chemical reformation (80 °C, 30 minutes and 8V) was carried out in aqueous 1% phosphoric acid solution to thereby mend minute defects in LC (leakage current) of the dielectric layer. The series of operations of impregnation with precursors for forming a semiconductor layer, applying of current, and chemical reformation was repeated 11 times (in the last two, applying of current was conducted for 60 minutes). Then the sintered body was washed with water and then with ethanol and dried, to thereby obtain a semiconductor layer. Further, except for the face having the lead wire implanted therein, carbon paste and silver paste were sequentially attached on the semiconductor layer and dried to thereby form an electrode layer serving as cathode part, whereby a solid electrolytic capacitor element was produced.

On the front surfaces of a pair of end parts of a separately-prepared 100µm-thick copper-alloy-made lead frame, the two solid electrolytic capacitor elements were placed with no space between, with the faces (4.5 mm × 1.5 mm) each having a cathode part thereon aligned with each other and with the anode lead wires (a part of which had been cut off) disposed in the same direction. (The lead frame had a nickel plating of average thickness of 1 µm and had a tin plating of average thickness of 7 µm on the nickel plating. The frame had 32 pairs of end parts of 3.4 mm width and one end part of each pair had been processed to have a 0.5-mm step so that a conductor having an electrode layer formed thereon could be accommodated. There is a 1.0 mm gap between end parts of a pair (if projected in one plane). Those were electrically and mechanically connected, i.e., the former (cathode parts) was connected to the frame through solidification of silver paste which was the same as cathode part material and the latter (anode lead wires) was connected by welding. Subsequently, the entirety except for a part of the lead frame was subjected to transfer-molding with epoxy resin to thereby be jacketed, and further the portion outside the resin jacket was cut off at a predetermined position and the remaining part thereof was bended along the jacket. Further, the jacketing resin was cured at 185 °C and then aging treatment was carried out at 125 °C and 3.5 V for 4 hours, whereby 320 units of solid electrolytic capacitor having a size of 7.3×.3×1.8 mm were produced.

### Comparative Example 1:

320 units of solid electrolytic capacitor were produced in the same manner as in Example 1 except that no insulating plate was provided. However, short circuit between the anode and the cathode was observed in some units among the produced 320 units, and the number of units obtained as usable capacitors was 224.

### Example 4 to 8:

An insulating plate was fixed with the distance (between the insulating plate and each sintered body) shown in Table 1 in the same manner as in Example 1 in a lead frame as in the same manner as in Example 1 except that niobium sintered bodies (of a powder having a CV value of 250,000 µF·V/g, having a nitridation amount of 11,000 ppm and oxgen amount on the surface by natural oxidation of 81,000 ppm, sintered at 1280 °C for 30 minutes and having a density of 3.4 g/cm³) were used instead of tantalum sintered bodies, that 0.29mmϕ niobium lead wires were used instead of tantalum lead wires and that silicon-made plates of 1.5 (length)×1.0(width)×0.3mm(thickness) each having a 0.27mmϕ hole in the center were used as insulating plates.
Next, a dielectric oxide film layer consisting of Nb₂O₅ was formed by chemical formation at 23 V. Further, each of the sintered bodies was immersed in an alcohol solution of 2% ethylenedioxythiophene, pulled out and left to stand. Then, the sintered body was immersed in an alcohol solution of 18% iron naphthalenesulfonate, pulled out, left to stand at 40 °C for 30 minutes and then immersed in ethanol. This series of operations was repeated 7 times, followed by chemical reformation in 0.1% acetic acid solution at 17 V and 80 °C for 30 minutes, washing with water and drying.

Next, the sintered body except for the lead wire was immersed in an alcohol solution of 25 % 3,4-ethylenedioxythiophene monomer, pulled out, dried at 80 °C to thereby allow alcohol to evaporate and the inside of the pores of the sintered body to be impregnated with precursors for forming a semiconductor layer.

Then, electric current application and chemical reformation (14 V) were repeated in the same manner as in Example 1 to thereby form a semiconductor layer, followed by formation of a cathode layer and aging treatment (85 °C, 6V for 4 hours), whereby 320 units of solid electrolytic capacitor were produced.

### Comparative Example 2:

320 units of solid electrolytic capacitor were produced in the same manner as in Example 4 except that no insulating plate was provided. However, short circuit between the anode and the cathode was observed in some units among the produced 320 units, and the number of units obtained as usable capacitors was 206.

The initial LC value and LC values after moisture-resistance tests at 40 °C in 90 %RH and at 60 °C in 90%RH were measured on each of the capacitors produced above. The moisture resistance tests were conducted according to JIS C5102 standard. That is, the capacitors were left standing in a constant temperature and humidity container at 40 °C or 60 °C and 90 to 95 %RH for 500 hours and then taken out. A rated voltage was applied to the capacitors and the LC value of each of the capacitors after 30 minutes was measured at room temperature. The rated voltage was 2.5 V in Examples 1 to 3 and Comparative 1, and was 4 V in Examples 4 to 8 and Comparative Example 2. The measuring (average) results on all the 320 capacitors produced in each the Examples and 224 capacitors and 206 capacitors produced in Comparative Examples 1 and 2 respectively from which shorted capacitors were excluded are shown in Table 1.

**[Table 1]**

| Table 1 | | | | | |
|---|---|---|---|---|---|
| | | Distance (µm) | Initial LC (µA) | LC after 40° C·95%RH Moisture resistance test (µA) | °C after 60°C·995%RH Moisture resistance test (µA) |
| Example | 1 | 10 | 18 | 15 | 12 |
| | 2 | 40 | 16 | 12 | 11 |
| | 3 | 95 | 15 | 10 | 15 |
| | 4* | 0 | 17 | 14 | 67 |
| | 5 | 8 | 18 | 15 | 11 |
| | 6 | 25 | 15 | 11 | 16 |
| | 7 | 85 | 17 | 14 | 10 |
| | 8* | 120 | 36 | 44 | 40 |
| Comparative Example | 1 | Without insulting plate | 34 | 37 | 35 |
| | 2 | Without insulating plate | 30 | 31 | 28 |

| | | | | | |
|---|---|---|---|---|---|
| * not belonging to the scope of the present invention | | | | | |

The results shown in Table 1 reveal that the initial LC value could be better when an insulating plate was provided. It is confirmed that without a gap between the insulating plate and the sintered body, no problem was found in 40 °C moisture resistance test, but the LC value increased in 60 °C moisture resistance test. With a distance exceeding 100 µm between them, the LC value observed was on the same level with that of a case using no insulating plate, however, presence of the insulating plate is still preferred in that it can prevent semiconductor layer from crawling up and thereby short circuit at the time of connecting to the frame can be avoided.

### BRIEF DESCRIPTION OF DRAWINGS

[Fig. 1] Fig.1 shows a side view and top view of one embodiment of the solid electrolytic capacitor of the present invention

**EXPLANATION OF REFERENCE NUMBERS**

| | |
|---|---|
| 1 | sintered body |
| 2 | anode lead |
| 3 | insulating plate |
| 4 | hole |

## Claims

1. A solid electrolyte capacitor, which is a solid electrolytic capacitor obtainable by
implanting an anode lead (2) in one face of a rectangular parallelepiped sintered body (1) of conductive powder,
fixing an insulating plate (3) in parallel with and 5 to 100 µm apart from the face having the anode lead implanted therein, with the insulating plate having almost the same shape as the face having the anode lead implanted therein, and with the anode lead going through the plate,
stacking sequentially a dielectric oxide film, a semiconductor layer and an electrode layer on the sintered body, and
encapsulating the whole with jacketing resin.

2. The solid electrolytic capacitor according to claim 1, wherein the anode lead is in form of wire, foil or sheet.

3. The solid electrolytic capacitor according to claim 1, wherein the material of the anode lead is tantalum, aluminium, niobium, titanium or an alloy mainly containing these valve-action metals.

4. The solid electrolytic capacitor according to claim 1, wherein the conductive powder is a metal or alloy consisting mainly of at least one selected from the group consisting of tantalum, niobium, titanium and aluminium, niobium oxide, or a mixture of two or more of these metals, alloys and niobium oxide.

5. The solid electrolytic capacitor according to claim 1, wherein the semiconductor layer is at least one selected from organic semiconductor layer and inorganic semiconductor layer.

6. The solid electrolytic capacitor according to claim 5, wherein the organic semiconductor layer is at least one kind of semiconductors consisting mainly of an electroconductive polymer prepared by doping a polymer having a repeating unit represented by formula (1) or (2) with a dopant, 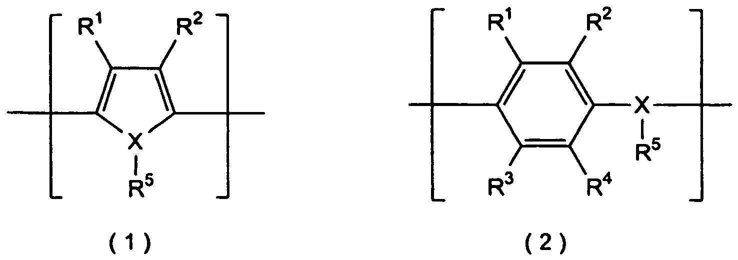 wherein R¹ to R⁴ each independently represents a hydrogen atom, an alkyl group having 1 to 6 carbon atoms or an alkoxy group having 1 to 6 carbon atoms, X represents an oxygen atom, a sulfur atom or a nitrogen atom, R⁵, which is present only when X is a nitrogen atom, represents a hydrogen atom or an alkyl group having 1 to 6 carbon atoms, and R¹ with R² or R³ with R⁴ may combine with each other to form a ring.

7. The solid electrolytic capacitor according to claim 6, wherein the electroconductive polymer having the repeating unit represented by formula (1) is an electroconductive polymer having as repeating unit a structural unit represented by formula(3), 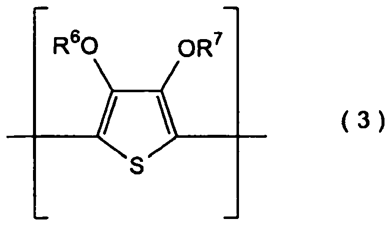 wherein R⁶ and R⁷ each independently represents a hydrogen atom, a linear or branched, saturated or unsaturated alkyl group having 1 to 6 carbon atoms, or a substituent forming at least one 5- to 7-membered saturated hydrocarbon ring structure containing two oxygen atoms, in which said alkyl groups are bonded at arbitrary positions with each other, wherein the ring structure includes those having a vinylene or phenylene bond which may be substituted.

8. The solid electrolytic capacitor according to claim 6, wherein the electroconductive polymer is selected from polyaniline, polyoxyphenylene, polyphenylene sulfide, polythiophene, polyfuran, polypyrrole, polymethylpyrrole, and substituted derivatives thereof and copolymers thereof.

9. The solid electrolytic capacitor according to claim 8, wherein the electroconductive polymer is poly(3,4-ethylenedioxythiophene).

10. The solid electrolytic capacitor according to claim 5, wherein the inorganic semiconductor is at least one compound selected from a group consisting of molybdenum dioxide, tungsten dioxide, lead dioxide and manganese dioxide.

11. The solid electrolytic capacitor according to claim 5, wherein the electroconductivity of the semiconductor is within a range of 10⁻² to 10³ S/cm⁻¹.

12. A method of producing a solid electrolytic capacitor comprising
implanting an anode lead (2) in one face of a rectangular parallelepiped sintered body (1) of conductive powder,
fixing an insulating plate (3) in parallel with and 5 to 100 µm apart from the face having the anode lead implanted therein, with the insulating plate having almost the same shape as the face having the anode lead implanted therein, and with the anode lead going through the plate,
stacking sequentially a dielectric oxide film, a semiconductor layer and an electrode layer on the sintered body, and
encapsulating the whole with jacketing resin.

13. An electronic circuit using the solid electrolytic capacitor described in any one of claims 1 to 11.

14. An electronic device using the solid electrolytic capacitor described in any one of claims 1 to 11.

## Patentansprüche

1. Festelektrolytkondensator, der ein Festelektrolytkondensator ist, erhältlich durch
Implantieren eines Anodenleiters (2) in eine Fläche eines rechtwinkligen quaderförmigen Sinterkörpers (1) aus leitendem Pulver,
Anbringen einer Isolierplatte (3) parallel zu und 5 bis 100 µm entfernt von der Fläche mit dem darin eingepflanzten Anodenleiter, wobei die Isolierplatte fast dieselbe Form hat wie die Fläche mit dem darin eingepflanzten Anodenleiter, und wobei der Anodenleiter die Platte durchdringt,
aufeinanderfolgendes Stapeln einer Folie eines dielektrischen Oxids, einer Halbleiterschicht und einer Elektrodenschicht auf den Sinterkörper und
das Einkapseln des Ganzen mit einem Mantelharz.

2. Festelektrolytkondensator nach Anspruch 1, wobei der Anodenleiter in der Form eines Drahtes, einer Folie oder eines Blattes ist.

3. Festelektrolytkondensator nach Anspruch 1, wobei das Material des Anodenleiters Tantal, Aluminium, Niob, Titan oder eine Legierung, die hauptsächlich diese ventilaktiven Metalle enthält, ist.

4. Festelektrolytkondensator nach Anspruch 1, wobei das leitende Pulver ein Metall oder eine Legierung ist, die hauptsächlich aus mindestens einem Mitglied der Gruppe ausgewählt ist, die aus Tantal, Niob, Titan und Aluminium, Nioboxid oder einem Gemisch von zwei oder mehr dieser Metalle, Legierungen und Nioboxid besteht.

5. Festelektrolytkondensator nach Anspruch 1, wobei die Halbleiterschicht mindestens ein unter einer organischen Halbleiterschicht und einer anorganischen Halbleiterschicht ausgewähltes Mitglied ist.

6. Festelektrolytkondensator nach Anspruch 5, wobei die organische Halbleiterschicht mindestens eine Art von Halbleitern ist, die hauptsächlich aus einem elektrisch leitenden Polymer besteht, das hergestellt ist durch Dotieren eines Polymers, das eine Wiederholungseinheit der Formel (1) oder (2) aufweist, mit einem Dotierungsmittel, 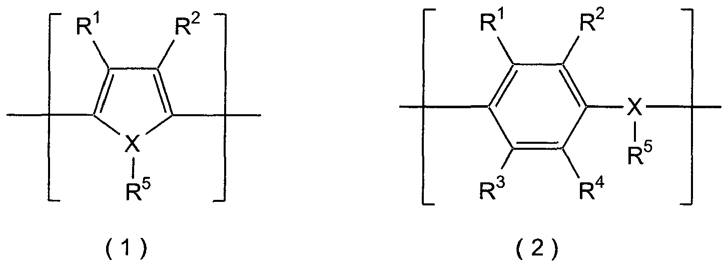 worin R¹ bis R⁴ jeweils unabhängig voneinander ein Wasserstoffatom, eine Alkylgruppe mit 1 bis 6 Kohlenstoffatomen oder eine Alkxoygruppe mit 1 bis 6 Kohlenstoffatomen darstellen, X ein Sauerstoffatom, ein Schwefelatom oder ein Stickstoffatom darstellt, R⁵, das nur vorhanden ist, wenn X ein Stickstoffatom ist, ein Wasserstoffatom oder eine Alkylgruppe mit 1 bis 6 Kohlenstoffatomen darstellt und R¹ mit R² oder R³ mit R⁴ unter Bildung eines Rings miteinander kombiniert sein können.

7. Festelektrolytkondensator nach Anspruch 6, wobei das elektrisch leitende Polymer mit der Wiederholungseinheit der Formel (1) ein elektrisch leitendes Polymer mit einer Struktureinheit der Formel (3) als Wiederholungseinheit ist, 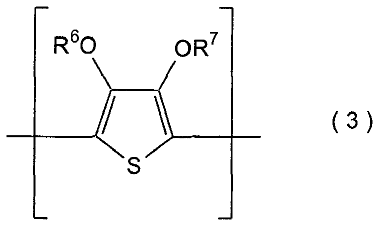 worin R⁶ und R⁷ jeweils unabhängig voneinander ein Wasserstoffatom, eine lineare oder verzweigte, gesättigte oder ungesättigte Alkylgruppe mit 1 bis 6 Kohlenstoffatomen oder einen Substituenten darstellen, der mindestens eine 5- bis 7-gliedrige gesättigte Kohlenwasserstoffringstruktur bildet, die zwei Sauerstoffatome enthält, wobei die Alkylgruppen an beliebigen Positionen miteinander verbunden sind, wobei die Ringstruktur solche mit einer Vinylen- oder Phenylenbindung, welche substituiert sein kann, umfasst.

8. Festelektrolytkondensator nach Anspruch 6, wobei das elektrisch leitende Polymer unter Polyanilin, Polyoxyphenylen, Polyphenylensulfid, Polythiophen, Polyfuran, Polypyrrol, Polymethylpyrrol und substituierten Derivaten davon und Copolymeren davon ausgewählt ist.

9. Festelektrolytkondensator nach Anspruch 8, wobei das elektrisch leitende Polymer Poly(3,4-ethylendioxythiophen) ist.

10. Festelektrolytkondensator nach Anspruch 5, wobei der anorganische Halbleiter mindestens eine Verbindung ist, die aus einer Gruppe ausgewählt ist, die aus Molybdändioxid, Wolframdioxid, Bleidioxid und Mangandioxid besteht.

11. Festelektrolytkondensator nach Anspruch 5, wobei die elektrische Leitfähigkeit des Halbleiters innerhalb eines Bereichs von 10⁻² bis 10³ S/cm⁻¹.

12. Verfahren zum Herstellen eines Festelektrolytkondensators, umfassend das
Implantieren eines Anodenleiters (2) in eine Fläche eines rechtwinkligen quaderförmigen Sinterkörpers (1) aus leitendem Pulver,
Anbringen einer Isolierplatte (3) parallel zu und 5 bis 100 µm entfernt von der Fläche mit dem darin eingepflanzten Anodenleiter, wobei die Isolierplatte fast dieselbe Form hat wie die Fläche mit dem darin eingepflanzten Anodenleiter, und wobei der Anodenleiter die Platte durchdringt,
aufeinanderfolgendes Stapeln einer Folie eines dielektrischen Oxids, einer Halbleiterschicht und einer Elektrodenschicht auf den Sinterkörper und
das Einkapseln des Ganzen mit einem Mantelharz.

13. Elektronischer Schaltkreis unter Verwendung des Festelektrolytkondensators nach einem der Ansprüche 1 bis 11.

14. Elektronische Vorrichtung unter Verwendung des Festelektrolytkondensators nach einem der Ansprüche 1 bis 11.

## Revendications

1. Condensateur à électrolyte solide, lequel est un condensateur électrolytique solide pouvant être obtenu par
implantation d'un fil conducteur d'anode (2) dans une face d'un corps fritté parallélépipédique rectangulaire (1) de poudre conductrice,
fixation d'une plaque isolante (3) parallèlement à et espacée de 5 à 100 µm de la face présentant le fil conducteur d'anode implanté dans celle-ci, avec la plaque isolante ayant presque la même forme que la face présentant le fil conducteur d'anode implanté dans celle-ci, et avec le fil conducteur d'anode traversant la plaque,
empilement successif d'un film d'oxyde diélectrique, d'une couche de semi-conducteur et d'une couche d'électrode sur le corps fritté, et
encapsulation de la totalité avec une résine de chemisage.

2. Condensateur électrolytique solide selon la revendication 1, dans lequel le fil conducteur d'anode est dans la forme d'un câble, d'une mince feuille ou d'une feuille.

3. Condensateur électrolytique solide selon la revendication 1, dans lequel le matériau du fil conducteur d'anode est le tantale, l'aluminium, le niobium, le titane ou un alliage contenant principalement ces métaux à conductibilité unidirectionnelle.

4. Condensateur électrolytique solide selon la revendication 1, dans lequel la poudre conductrice est un métal ou un alliage consistant principalement en au moins un choisi dans le groupe constitué du tantale, du niobium, du titane et de l'aluminium, de l'oxyde de niobium, ou d'un mélange de deux ou plusieurs de ces métaux, alliages et oxyde de niobium.

5. Condensateur électrolytique solide selon la revendication 1, dans lequel la couche semiconductrice est au moins une choisie parmi une couche de semiconducteur organique et une couche de semiconducteur inorganique.

6. Condensateur électrolytique solide selon la revendication 5, dans lequel la couche de semiconducteur organique est au moins un type de semiconducteur consistant principalement en un polymère électroconducteur préparé en dopant un polymère présentant une unité répétitive représentée par la formule (1) ou (2) avec un dopant, 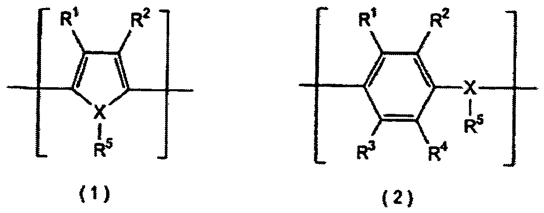 où R¹ à R⁴ représentent chacun indépendamment un atome d'hydrogène, un groupe alkyle ayant de 1 à 6 atomes de carbone ou un groupe alcoxy ayant de 1 à 6 atomes de carbone, X représente un atome d'oxygène, un atome de soufre ou un atome d'azote, R⁵, qui est présent uniquement lorsque X est un atome d'azote, représente un atome d'hydrogène ou un groupe alkyle ayant de 1 à 6 atomes de carbone, et R¹ avec R² ou R³ avec R⁴ peuvent être combinés l'un avec l'autre pour former un cycle.

7. Condensateur électrolytique solide selon la revendication 6, dans lequel le polymère électroconducteur présentant l'unité répétitive représentée par la formule (1) est un polymère électroconducteur ayant comme unité répétitive une unité de structure représentée par la formule (3), 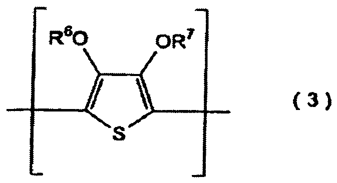 dans laquelle R⁶ et R⁷ représentent chacun indépendamment un atome d'hydrogène, un groupe alkyle linéaire ou ramifié, saturé ou insaturé ayant de 1 à 6 atomes de carbone, ou un substituant formant au moins une structure cyclique hydrocarbonée saturée à de 5 à 7 éléments contenant deux atomes d'oxygène, dans lequel lesdits groupes alkyle sont liés à des positions arbitraires les uns aux autres, dans lequel la structure cyclique comprend celles présentant une liaison vinylène ou phénylène qui peut être substituée.

8. Condensateur électrolytique solide selon la revendication 6, dans lequel le polymère électroconducteur est choisi parmi la polyaniline, le polyoxyphénylène, le poly(sulfure de phénylène), le polythiophène, le polyfurane, le polypyrrole, le polyméthylpyrrole, et des dérivés substitués de ceux-ci et des copolymères de ceux-ci.

9. Condensateur électrolytique solide selon la revendication 8, dans lequel le polymère électroconducteur est le poly(3,4-éthylènedioxythiophène).

10. Condensateur électrolytique solide selon la revendication 5, dans lequel le semiconducteur inorganique est au moins un composé choisi dans un groupe constitué du dioxyde de molybdène, du dioxyde de tungstène, du dioxyde de plomb et du dioxyde de manganèse.

11. Condensateur électrolytique solide selon la revendication 5, dans lequel l'électroconductivité du semiconducteur se trouve dans un intervalle de 10⁻² à 10³ S/cm⁻¹.

12. Procédé de production d'un condensateur électrolytique solide comprenant
l'implantation d'un fil conducteur d'anode (2) dans une face d'un corps fritté parallélépipédique rectangulaire (1) de poudre conductrice,
la fixation d'une plaque isolante (3) parallèlement à et espacée de 5 à 100 µm de la face présentant le fil conducteur d'anode implanté dans celle-ci, avec la plaque isolante ayant presque la même forme que la face présentant le conducteur d'anode implanté dans celle-ci, et avec le fil conducteur d'anode traversant la plaque,
l'empilement successif d'un film d'oxyde diélectrique, d'une couche de semiconducteur et d'une couche d'électrode sur le corps fritté, et
l'encapsulation de la totalité avec une résine de chemisage.

13. Circuit électronique utilisant le condensateur électrolytique solide décrit dans l'une quelconque des revendications 1 à 11.

14. Dispositif électronique utilisant le condensateur électrolytique solide décrit dans l'une quelconque des revendications 1 à 11.
